Europäisches Patentamt

European Patent Office

Office européen des brevets

(19)

(11) Publication number: **0 108 176**

**A1**

(12) **EUROPEAN PATENT APPLICATION**

(21) Application number: **82305912.6**

(22) Date of filing: **05.11.82**

(51) Int. Cl.³: **B 60 C 23/00**

(43) Date of publication of application:
**16.05.84 Bulletin 84/20**

(84) Designated Contracting States:
**AT BE CH DE FR GB IT LI LU NL SE**

(71) Applicant: Galasko, Philip Elliot
3, The Boulders Khyber Rock
Sandton Transvaal(ZA)

(72) Inventor: Kruger, Frans Johannes
919 Arcadia Street
Arcadia, Pretoria Transvaal(ZA)

(72) Inventor: Galasko, Philip Elliot
3, The Boulders Khyber Rock
Sandton Transvaal(ZA)

(74) Representative: Parker, Jeffrey et al,
Frank B. Dehn & Co. Imperial House 15-19 Kingsway
London, WC2B 6UZ(GB)

(54) **Detection of a low pressure condition of a pneumatic vehicle tyre.**

(57) A tyre pressure warning device including an oscillatory circuit (16) mounted on the rim of a vehicle wheel (12). A pressure sensing device (14) adjusts the natural frequency of oscillations of the circuit (16) according to the tyre (10) pressure. The circuit (16) is driven into oscillation by a transmitting coil (20) and the frequency of oscillation is sensed via a coil (22) and electrical circuits (30), (32), (34) and (36), which give a visual or audible signal which can be arranged to control automatically the inflation or deflation of the tyre (10). The device is arranged to selectively measure the conditions of two or more tyres of a vehicle.

FIG _ 2

EP 0 108 176 A1

0108176

- 1 -

THE invention relates generally to detecting conditions of rotatable members and has particularly although not exclusive applications to detecting the condition of a vehicle tyre.

According to the invention there is provided a device for measuring variable conditions of a rotatable member including mounted on the rotatable member an electrical oscillatory circuit and condition monitoring means arranged to adjust the natural frequency of oscillations of the circuit in response to changes in a condition to be measured, and a frequency detector circuit positioned adjacent the rotatable member to sense the frequency of oscillations of the oscillatory circuit and to provide an output corresponding to the measured condition.

The device may be for measuring the condition of a vehicle tyre in which case the oscillatory circuit is mounted to sense the condition of the tyre and the detector circuit is secured to a structural member of the vehicle.

The condition monitoring means may comprise an air pressure sensing device which is arranged to adjust a capacitive component of the oscillatory circuit.

The oscillatory circuit may have separate capacitive devices arranged to be selectively switched into the oscillatory circuit and the pressure sensing device is arranged to control the selective switching.

The device may be fitted to measure the condition of two or more tyres of a vehicle and include switching means for selectively providing the outputs of the measured condition at a central console. A single frequency detector circuit may be arranged to be selectively switched to measure the frequency of oscillations of a number of oscillatory circuits, one oscillatory circuit being provided for each tyre.

The output signal may be arranged to control automatically the inflation or deflation of the tyre.

The output signal may be arranged to produce a warning signal whenever its value differs from a predetermined value or range of values. Such a signal may be a visual signal or an audible signal.

- 3 -

A tyre pressure measuring device according to the invention
will now be described by way of example with reference to
the accompanying drawings in which :-

Figure 1 is a cross-section of part of a tyre showing
schematically part of the device;

Figure 2 is a schematic circuit diagram of the device; and

Figure 3 and 4 are circuit diagrams of parts of the device.


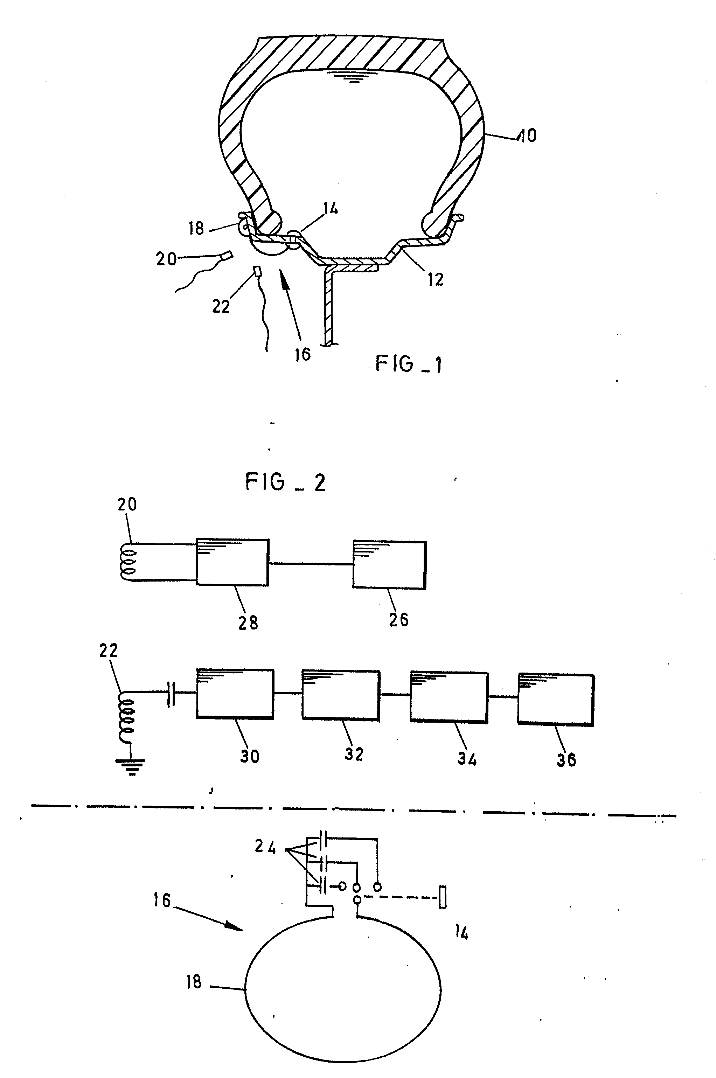

Referring to the drawing, in Figure 1 a vehicle tyre 10 is
mounted on a rim 12 to which is fitted an air pressure
sensing device 14 coupled to an electrical oscillatory
circuit 16. The circuit 16 includes an inductance coil 18
attached to and around the rim 12. A transmitting inductance
coil 20 and receiving inductance coil 22 are attached to a
fixed (non-rotatable) structural member (not shown) of the
vehicle.

In Figure 2, the oscillatory circuit 16 comprises of the
inductance coil 18 which can be connected selectively in
series with three capacitors 24. The sensing device 14 is
arranged to select which of the capacitors 24 is connected
to the coil 18.

The inductance coil 20 is driven by a pulse generator 26
via an amplifier 28.    The inductance coil 22 is connected
to a series circuit comprising an amplifier 30, a divider
circuit 32, a frequency to direct current convertor 34 and a
comparator/indicator circuit 36.

In use, whether the vehicle tyre is stationary or rotating,
the oscillatory circuit 16 is inductively energised by a field generated by the coil 20. The oscillatory circuit 16 oscillates at its natural frequency, the value of which depends on which of the capacitors 24 is in series with the coil 18. The frequency of oscillation is sensed by inductive coupling with the coil 22 and the frequency of oscillation detected by the circuits 30, 32, 34 and 36 to provide an output corresponding to that frequency.

Thus, for example if the tyre pressure falls to an unsatisfactory low level the pressure sensing device 14 causes an appropriate one of the capacitors 24 to be connected in series with the coil 18. The detected frequency that corresponds to a low tyre pressure causes an output signal at the circuit 36 which can be used as a warning to the driver of the vehicle.

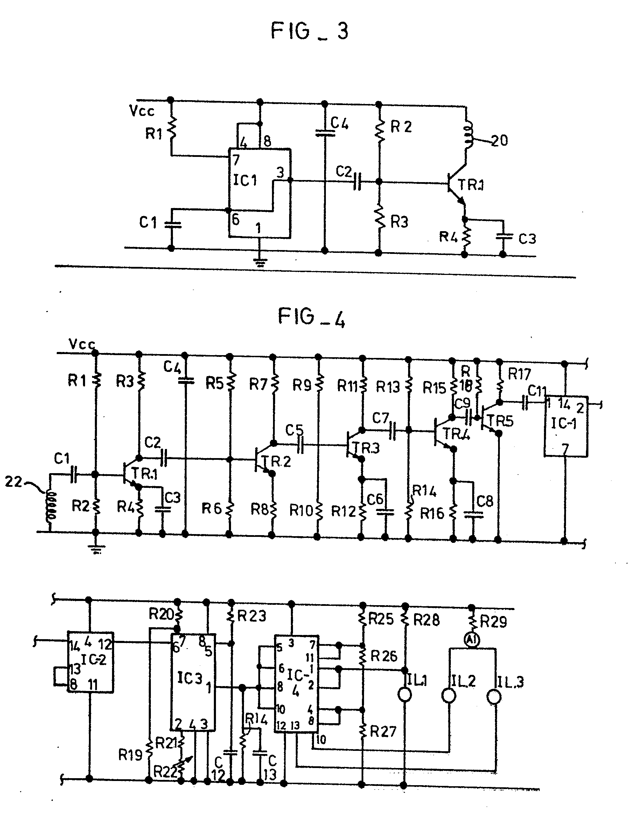

The circuit details of the pulse generator 26 and the amplifier 28 are shown in Figure 3. The circuit details of the amplifier 30, the divider circuit 32, the frequency to direct current convention 34 and the comparator/indicator circuit 36 are shown in Figure 4.

An output of the comparator/indicator may be provided to produce an audible or visual alarm if the pressure of the tyre reduces to below or exceeds above a predetermined pressure, as desired.

Many variations to the device are envisaged. For example, the sensing device 14 may be arranged to adjust a variable capacitor, or select a particular one of separate inductance coils, or vary a variable inductance coil. Further, the sensing device may be arranged to sense another condition such as temperature. Pressure and temperature devices may be provided in combination and the frequency oscillations in the coil 18, or other coils, may be separately measured to determine either the pressure or temperature in turn.

CLAIMS:

1. A device for measuring variable conditions of a rotatable member including mounted on the rotatable member an electrical oscillatory circuit and condition monitoring means arranged to adjust the natural frequency of oscillations of the circuit in response to changes in a condition to be measured, and a frequency detector circuit positioned adjacent the rotatable member to sense the frequency of oscillations of the oscillatory circuit and to provide an output corresponding to the measured condition.

2. A device according to Claim 1 for measuring the condition of a vehicle tyre in which the oscillatory circuit is mounted to sense the condition of the tyre and the detector circuit is secured to a structural member of the vehicle.

3. A device according to Claim 2 in which the condition monitoring means comprises an air pressure sensing device which is arranged to adjust a capacitive component of the oscillatory circuit.

4. A device according to Claim 3, in which the oscillatory circuit has separate capacitive devices arranged to be selectively switched into the oscillatory circuit and the pressure sensing device is arranged to control the selective switching.

5. A device according to any one of Claims 2 to 4, fitted to measure the condition of two or more tyres of a vehicle and including switching means for selectively providing the outputs of the measured condition at a central console.

6. A device according to Claim 5, in which a single

- 6 -

frequency detector circuit is arranged to be selectively switched to measure the frequency of oscillations of a number of oscillatory circuits, one oscillatory circuit being provided for each tyre.

7. A device according to any one of Claims 2 to 6, in which the output signal is arranged to control automatically the inflation or deflation of the tyre.

8. A device according to any one of Claims 2 to 6, in which the output signal is arranged to produce a warning signal whenever its value differs from a predetermined value or range of values.

9. A device according to Claim 8 in which the warning signal is a visual signal.

10. A device according to Claim 8 in which the warning signal is an audible signal.

0108176

1/2

FIG _ 1

FIG _ 2

2/2.

0108176

FIG _ 3

FIG _ 4

0108176

**European Patent Office**

## EUROPEAN SEARCH REPORT

Application number

EP 82 30 5912

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 065 896 (BOSCH) <br> * Page 1, line 35 - page 2, line 66; figures 1-4 * | 1-3 | B 60 C 23/00 |
| X | US-A-2 274 557 (MORGAN et al.) <br> * Whole document * | 1-5,9 | |
| X | EP-A-0 045 401 (BMW) <br><br> * Page 4, line 28 - page 7, line 30; figure 1 * | 1-3,5, 6,8,9 | |
| X | GB-A-2 069 209 (MEISEI) <br><br> * Page 2, lines 39-50; page 4, line 108 - page 6, line 35; figure 5 * | 1-3,5, 6,8,10 | |
| X | FR-A-2 344 007 (CONSOLIDATED FREIGHTWAYS) <br> * Page 1, lines 1-3; page 2, lines 11-35; page 5, line 11 - page 6, line 24; page 8, lines 17-25; page 9, line 8 - page 10, line 18; page 11, line 16 - page 15, line 22; page 20, line 26 - page 24, line 36; figures 1,3-6,9,14-16 * | 1,2,5, 6,8-10 | |

|  |  |
|---|---|
| | **TECHNICAL FIELDS SEARCHED (Int. Cl. ³)** |
| | B 60 C 23/00 <br> B 60 C 23/02 <br> B 60 C 23/04 <br> B 60 C 23/06 <br> B 60 C 23/08 <br> B 60 Q 1/00 <br> B 60 Q 1/40 <br> B 60 R 16/02 <br> B 60 C 23/20 |

-/-

The present search report has been drawn up for all claims

| Place of search | Date of completion of the search | Examiner |
|---|---|---|
| THE HAGUE | 01-07-1983 | VERLEYE J. |

## European Patent Office

## EUROPEAN SEARCH REPORT

Application number

EP 82 30 5912

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 454 382 (PAPPAS et al.)<br><br>* Page 8, line 9 - page 9, line 16; page 23, line 3 - page 25, line 4; figures 2,3,4 * | 1,5,6, 9,10 | |
| A | DE-A-2 854 772 (GEHRKE)<br><br>* Page 5, line 30 - page 8, line 7; figure 1 * | 1-3,5, 7-10 | |
| A | FR-A-2 434 718 (FRATELLI BORLETTI)<br>* Page 3, line 25 - page 12, line 2; figure * | 5,9,10 | |

TECHNICAL FIELDS SEARCHED (Int. Cl. ³)

The present search report has been drawn up for all claims

| Place of search | Date of completion of the search | Examiner |
|---|---|---|
| THE HAGUE | 01-07-1983 | VERLEYE J. |